# EUROPÄISCHE PATENTSCHRIFT

(11) **EP 3 023 674 B1**
(45) Veröffentlichungstag und Bekanntmachung des Hinweises auf die Patenterteilung: **06.05.2020**
(21) Anmeldenummer: 15195960.8
(22) Anmeldetag: 24.11.2015
(51) Int. Cl.: F16J 15/48

(54) **VERSCHLUSS UND FLACHDICHTUNG**
CLOSURE AND GASKET
FERMETURE ET JOINT PLAT

(30) Priorität: 24.11.2014 GB 201420818; 25.05.2015 DE 102015108205
(43) Veröffentlichungstag der Anmeldung: 25.05.2016
(60) Teilanmeldung: 19176081.8
(73) Patentinhaber: Schneider, Thomas, 4434 Hoelstein (CH)
(72) Erfinder: Schneider, Thomas, 4434 Hoelstein (CH)
(74) Vertreter: Wolf, Michael

(56) Entgegenhaltungen:
- FR-A1- 2 289 815
- FR-A5- 2 044 199
- US-A- 3 339 948
- US-A1- 2006 061 047
- US-A1- 2007 024 007

## Beschreibung

Die Erfindung betrifft einen Verschluss gemäß dem Oberbegriff des Patentanspruchs 1.

Ein Verschluss der eingangs genannten Art ist aus dem Patentdokument FR 2 044 199 A5 bekannt. Dieser Verschluss besteht aus einer Öffnung und einem zum Verschließen der Öffnung ausgebildeten Deckel, wobei zwischen der Öffnung und dem Deckel eine mit Abdichtelementen versehene Dichteinrichtung angeordnet ist. Außerdem ist ein Abdichtelement in Verschlussstellung zur Ermöglichung einer Relativbewegung zwischen der Öffnung und dem Deckel bei einer Druckbelastung des Deckels mit einer Wandung der Verschlusseinrichtung hubkolbenartig zusammenwirkend ausgebildet.

Ferner ist ein ähnlicher Verschluss aus dem Patentdokument EP 0 659 942 A2 bekannt. Als Abdichtelemente werden bei dieser Lösung so genannte O-Ringe verwendet, wobei ein O-Ring öffnungsseitig und ein O-Ring deckelseitig an der ringförmigen Dichteinrichtung angeordnet ist.

Der Erfindung liegt die Aufgabe zugrunde, einen Verschluss der eingangs genannten Art zu verbessern. Insbesondere soll ein noch besser abdichtender Verschluss geschaffen werden.

Diese Aufgabe ist mit einem Verschluss der eingangs genannten Art durch die im Kennzeichen des Patentanspruchs 1 aufgeführten Merkmale gelöst.

Nach der Erfindung ist also vorgesehen, dass die Dichteinrichtung einen ersten und einen zweiten Teilkörper umfasst und dass zwischen den Teilkörpern der Dichteinrichtung ein Abdichtelement angeordnet ist und einer der Teilkörper die Wandung für das Abdichtelement bildet.

Mit anderen Worten zeichnet sich die erfindungsgemäße Lösung somit dadurch aus, dass einer möglichen, druckbedingten Verformung des Deckels und einer damit letztlich drohenden Undichtigkeit des Verschlusses dadurch Rechnung getragen wird, dass die Dichteinrichtung in Verschlussstellung wie ein Hubkolben wahlweise, was weiter unten noch genauer erläutert wird, selbst oder im Zusammenwirken mit der Öffnung oder dem Deckel einer Relativbewegung zwischen Deckel und Öffnung folgt, d. h. der erfindungsgemäße Verschuss ist mehr als über das vergleichsweise geringe Toleranzmaß der eigentlichen Abdichtelemente hinaus in der Lage, auch bei größeren Relativbewegungen zwischen Deckel und Öffnung, insbesondere bei einer druckbedingten Verformung des Deckels, die Dichtigkeit des Verschlusses zu gewährleisten.

Andere vorteilhafte Weiterbildungen des erfindungsgemäßen Verschlusses ergeben sich aus den abhängigen Patentansprüchen.

Der Vollständigkeit halber wird noch auf das Patentdokument FR 2 289 815 A1 hingewiesen.

Der erfindungsgemäße Verschluss einschließlich seiner vorteilhaften Weiterbildungen gemäß der abhängigen Patentansprüche wird nachfolgend anhand der zeichnerischen Darstellung eines-Ausführungsbeispiels näher erläutert, welches in keinerlei Weise als einschränkend aufzufassen ist.

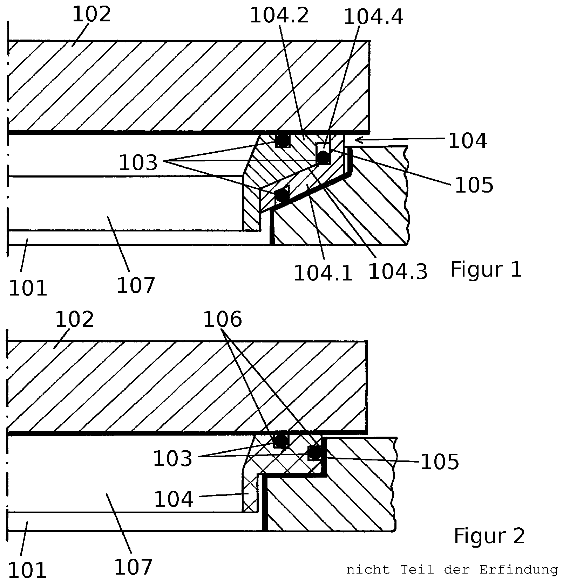

Es zeigt jeweils im Schnitt
- Figur 1: eine Ausführungsform des erfindungsgemäßen Verschlusses mit einer zweiteiligen Dichteinrichtung.

Der in Figur 1 dargestellte, erfindungsgemäße Verschluss, besteht zunächst in bekannter Weise aus einer Öffnung 101 und einem zum Verschließen der Öffnung 101 ausgebildeten Deckel 102, wobei zwischen der Öffnung 101 und dem Deckel 102 eine mit Abdichtelementen 103 versehene Dichteinrichtung 104 angeordnet ist, die typischer Weise in die Öffnung 101 einsetzbar ausgebildet ist und selbst eine Durchgriffsöffnung 107 (bzw. Einfüllöffnung) aufweist. Der Deckel 102 ist dabei, was nicht extra dargestellt ist, insbesondere klappbar mit der Öffnung 101 verbunden, wie dies zum Beispiel aus dem Patentdokument DE 10 2007 030 348 A1 für einen so genannten Schnellverschluss bekannt ist. Der Deckel 102 kann aber auch in jeder sonst bekannten Weise mit der Öffnung 101 verbunden ausgebildet sein.

Weiterhin ist in an sich bekannter Weise besonders bevorzugt vorgesehen, dass mindestens ein, vorzugsweise alle, Abdichtelement/e 103 als O-Ring ausgebildet ist/sind. Ferner sind, wie dargestellt, die Abdichtelemente 103 besonders bevorzugt in an der Dichteinrichtung 104 vorgesehenen Nuten 106 angeordnet, wobei die Nuten 106 - wie bei Verwendung von O-Ringen üblich - gerade so groß ausgebildet sind, dass der O-Ring in diese zwar hinein passt, aber dennoch eine Dichtwirkung über den bei geöffnetem Verschluss aus der Nut 106 hinausstehenden O-Ring gewährleistet ist.

Außerdem ist, wenn auch nur über die gezeichneten Bruchlinien angedeutet dargestellt, vorgesehen, dass die Öffnung 101 als Teil eines Druckbehälters ausgebildet ist. Ein solcher Druckbehälter dient beispielsweise in der chemischen Industrie zur Aufnahme von Fluiden, wobei je nach Agressivität des Fluids darüber hinaus vorgesehen sein kann, dass insbesondere wahlweise die Öffnung 101 und/oder der Deckel 102 abdichtelementseitig mit einer Schicht aus Emaille versehen ist. Diese Schicht ist in der Figur 1 als besonders dicke Linie dargestellt.

Aufgrund der zum Beispiel in Bezug auf Edelstahloberflächen vergleichsweise großen Unebenheit solcher Emaille-Schichten stellt die Abdichtung eines derart beschichteten Verschlusses eine besondere Herausforderung dar, zumal die Schicht selbst vergleichsweise stoßempfindlich ist, d. h. die zwischen Deckel und Öffnung positionierte Dichteinrichtung sollte Eigenschaften aufweisen, die einem Abplatzen der Emaille-Schicht entgegenwirken. Hierzu ist insbesondere vorgesehen, dass die Dichteinrichtung 104 aus einem elastomerartigen Material gebildet ist, denn diese führt zu einer gewissen Nachgiebig- und Anpassbarkeit der Dichteinrichtung 104 an mögliche Unebenheiten der Emaille-Schicht, ganz abgesehen davon, dass die Dichteinrichtung 104 auf diese Weise aus einem weiteren Material als die Öffnung 101 bzw. der Deckel 102 besteht.

Weiterhin ist vorgesehen, dass ein Abdichtelement 103 in Verschlussstellung zur Ermöglichung einer Relativbewegung zwischen der Öffnung 101 und dem Deckel 102 bei einer Druckbelastung des Deckels 102 mit einer Wandung 105 der Verschlusseinrichtung hubkolbenartig zusammenwirkend ausgebildet ist. Dabei ist die Wandung 105 parallel zur Hubkolbenbewegungsrichtung des Deckels 102 verlaufend ausgebildet.

Wie eingangs bereits erläutert, führt diese Maßgabe zu einer besonders guten Abdichtung, und zwar insbesondere bei Verschlüssen mit Emaille-Schicht, bei denen, wie oben erläutert, unebenheitsbedingt besonders große Maßungenauigkeiten an der Öffnung und am Deckel auftreten können.

Dabei ist weiterhin besonders bevorzugt vorgesehen, dass bei ringförmiger Ausbildung der Abdichtelemente 103 das mit der Wandung 105 hubkolbenartig zusammenwirkende Abdichtelement den größten Durchmesser aufweist. Dies führt einerseits zu einer großen Druckangriffsfläche und damit andererseits zu einer großen Kraft auf das jeweils andere Abdichtelement 103. In der Praxis hat sich gezeigt, dass dabei eine Durchmesserdifferenz zwischen den Abdichtelementen von mindestens dem vierfachen des Durchmessers der Abdichtelemente (bei einem O-Ring die sogenannte Schnurstärke) zu sehr guten Ergebnissen führt.

Der Begriff ringförmig ist dabei so zu verstehen, dass damit sowohl kreisringförmig, aber auch oval oder gegebenenfalls sogar mehreckig (zum Beispiel sechs- oder achteckig) gemeint ist. Typischer Weise sind Verschlüsse der erfindungsgemäßen Art kreisringförmig ausgebildet, die Erfindung ist aber ebenso gut bei entsprechend oval oder auch vieleckig ausgebildeten Verschlüssen einsetzbar.

Hierzu wird noch auf Figur 1 verwiesen, bei der die links dargestellte Mittellinie andeutet, dass die dort dargestellten Verschlüsse ringförmig, insbesondere kreisringförmig, ausgebildet sind. Noch etwas genauer betrachtet, ist die Öffnung 101 als rundes Loch, die Dichteinrichtung 104 als (was noch näher erläutert wird: ein- oder zweiteiliger) Kreisring und der Deckel als runde Scheibe oder dergleichen ausgebildet.

Bezüglich der für die Erfindung wesentlichen Wandung 105 ist im übrigen vorgesehen, dass diese an der Dichteinrichtung 104 (siehe hierzu Figur 1) angeordnet ist. Dies wird nachfolgend genauer betrachtet:
Wie aus Figur 1 ersichtlich, ist vorgesehen, dass die Dichteinrichtung 104 einen ersten und einen zweiten Teilkörper (bzw. Teilring) 104.1, 104.2 umfasst. Dabei ist zwischen den Teilkörpern 104.1, 104.2 der Dichteinrichtung 104 ein Abdichtelement 103 angeordnet und einer der Teilkörper 104.1, 104.2 bildet die Wandung 105 für das Abdichtelement 103. Noch etwas genauer betrachtet, ist zwischen den beiden Teilkörpern 104.1, 104.2 ein das Abdichtelement 103 aufnehmender Ringspaltraum 104.4 vorgesehen. Weiterhin sind die Teilkörper 104.1, 104.2 der Dichteinrichtung 104 hubkolbenartig zueinander verschieblich ausgebildet, wobei sich das im Ringspaltraum 104.4 angeordnete Abdichtelement 103 dann unter Gewährleistung der Dichtheit entsprechend mitverschiebt.

Weiterhin ist bei der Ausführungsform gemäß Figur 1 besonders bevorzugt zwischen den beiden Teilkörpern 104.1, 104.2 ein mit einem gleichen Druck wie der Deckel 102 belastbarer und bis zum Abdichtelement 103 bzw. Ringspaltraum 104.4 reichender Spalt 104.3 vorgesehen. Dieser Spalt 104.3 ist dabei vorzugsweise in Richtung Öffnung 101 schräg nach unten ins Innere des oben genannten Behälters verlaufend ausgebildet. Oder nochmals in anderen Worten: Bei ringförmiger Ausbildung der Dichteinrichtung 104 ist der Spalt 104.3 trichterförmig ausgebildet, d. h. im Spalt 104.3 vorhandenes Fluid läuft schwerkraftbedingt automatisch in den Behälter zurück.

Bezüglich der Ausführungsform gemäß Figur 1 ist schließlich, wie ersichtlich, vorgesehen, dass die zwei Teilkörper 104.1, 104.2 aufweisende Dichteinrichtung 104 insgesamt mindestens drei Abdichtelemente 103 aufweist, nämlich eines zwischen den beiden Teilkörpern 104.1, 104.2, eines öffnungsseitig und eines deckelseitig.

Bezüglich der oben genannten Durchmesserangabe bzw. Durchmessermaßgabe zu den Abdichtelementen 103, die bei eckiger Ausbildung des Verschlusses natürlich im übertragenen Sinne genauso gilt, ist für alle oben beschriebenen Ausführungsformen Folgendes von besonderer Bedeutung:
Aufgrund der genannten Anordnung des hubkolbenartig wirkenden Abdichtelements 103 ist gewährleistet, dass die Dichteinrichtung 104 mit ihrem/ihren weiteren Abdichtelement/en 103 wahlweise mindestens gegen die Öffnung 101 und/oder gegen den Deckel 102 (bei Überdruck im Behälter) gedrückt bzw. (bei Unterdruck im Behälter) gezogen wird, was damit zusammenhängt, dass die sich in Bezug auf das hubkolbenartig wirkende Abdichtelement 103 ergebende Druckangriffsfläche stets insgesamt größer ist als die sich für das andere/die anderen Abdichtelement/e 103 entsprechend ergebende/n Druckangriffsfläche/n.

### Bezugszeichenliste

- 101: Öffnung
- 102: Deckel
- 103: Abdichtelement
- 104: Dichteinrichtung
- 104.1: Teilkörper
- 104.2: Teilkörper
- 104.3: Spalt
- 104.4: Ringspaltraum
- 105: Wandung
- 106: Nut
- 107: Durchgriffsöffnung

## Patentansprüche

1. Verschluss, umfassend eine Öffnung (101) und ein zum Verschließen der Öffnung (101) ausgebildeter Deckel (102), wobei zwischen der Öffnung (101) und dem Deckel (102) eine mit Abdichtelementen (103) versehene Dichteinrichtung (104) angeordnet ist, wobei ein Abdichtelement (103) in Verschlussstellung zur Ermöglichung einer Relativbewegung zwischen der Öffnung (101) und dem Deckel (102) bei einer Druckbelastung des Deckels (102) mit einer Wandung (105) der Verschlusseinrichtung hubkolbenartig zusammenwirkend ausgebildet ist
**dadurch gekennzeichnet,**
**dass** die Dichteinrichtung (104) einen ersten und einen zweiten Teilkörper (104.1, 104.2) umfasst und dass zwischen den Teilkörpern (104.1, 104.2) der Dichteinrichtung (104) ein Abdichtelement (103) angeordnet ist und einer der Teilkörper (104.1, 104.2) die Wandung (105) für das Abdichtelement (103) bildet.

2. Verschluss nach Anspruch 1,
**dadurch gekennzeichnet,**
**dass** bei ringförmiger Ausbildung der Abdichtelemente (103) das mit der Wandung (105) hubkolbenartig zusammenwirkende Abdichtelement den größten Durchmesser aufweist.

3. Verschluss nach Anspruch 1 oder 2,
**dadurch gekennzeichnet,**
**dass** die Wandung (105) an der Dichteinrichtung (104) angeordnet ist.

4. Verschluss nach einem der Ansprüche 1 bis 3,
**dadurch gekennzeichnet,**
**dass** die Teilkörper (104.1, 104.2) der Dichteinrichtung (104) hubkolbenartig zueinander verschieblich ausgebildet sind.

5. Verschluss nach einem der Ansprüche 1 bis 4,
**dadurch gekennzeichnet,**
**dass** zwischen den beiden Teilkörpern (104.1, 104.2) ein mit einem gleichen Druck wie der Deckel (102) belastbarer und bis zum Abdichtelement (103) reichender Spalt (104.3) vorgesehen ist.

6. Verschluss nach Anspruch 5,
**dadurch gekennzeichnet,**
**dass** der Spalt (104.3) in Richtung Öffnung (101) schräg nach unten verlaufend ausgebildet ist.

## Claims

1. A closure, comprising an opening (101) and a lid (102) designed to close the opening (101), a sealing device (104) with sealing elements (103) being situated between the opening (101) and the lid (102), one sealing element (103) being designed to interact in a piston-like manner with a wall (105) of the closure device when in the closed position, to allow a relative movement between the opening (101) and the lid (102) when the lid (102) is placed under pressure,
**characterised in that**
the sealing device (104) comprises a first and a second part-body (104.1, 104.2) and that a sealing element (103) is situated between the part-bodies (104.1, 104.2) of the sealing device (104), and one of the part-bodies (104.1, 104.2) forms the wall (105) for the sealing element (103).

2. The closure according to claim 1,
**characterised in that**
when the sealing elements (103) are annular, the sealing element which interacts with the wall (105) in a piston-like manner has the greatest diameter.

3. The closure according to claim 1 or 2,
**characterised in that**
the wall (105) is situated on the sealing device (104).

4. The closure according to any one of claims 1 to 3,
**characterised in that**
the part-bodies (104.1, 104.2) of the sealing device (104) are displaceable relative to each other in a piston-like manner.

5. The closure according to any one of claims 1 to 4,
**characterised in that**
between the two part-bodies (104.1, 104.2) there is a gap (104.3) which can be placed under the same pressure as the lid (102) and extends as far as the sealing element (103).

6. The closure according to claim 5,
**characterised in that**
the gap (104.3) runs obliquely downwards towards the opening (101).

## Revendications

1. Fermeture comprenant une ouverture (101) et un couvercle (102) constitué pour fermer l'ouverture (101), sachant qu'entre l'ouverture (101) et le couvercle (102) est disposé un dispositif d'étanchéité (104) doté d'éléments d'étanchéité (103), sachant qu'un élément d'étanchéité (103) est constitué en position de fermeture en interagissant avec une paroi (105) du dispositif de fermeture comme un piston de levage pour permettre un mouvement relatif entre l'ouverture (101) et le couvercle (102) lors d'une charge de pression du couvercle (102),
**caractérisée en ce que**
le dispositif d'étanchéité (104) comprend une première et une deuxième partie de corps (104.1, 104.2) et **en ce qu'**entre les parties de corps (104.1, 104.2) du dispositif d'étanchéité (104) est disposé un élément d'étanchéité (103) et **en ce qu'**une des parties de corps (104.1, 104.2) forme la paroi (105) pour l'élément d'étanchéité (103).

2. Fermeture selon la revendication 1,
**caractérisée en ce que**
pour une constitution annulaire des éléments d'étanchéité (103), l'élément d'étanchéité interagissant avec la paroi (105) comme un piston de levage comporte le diamètre le plus grand.

3. Fermeture selon la revendication 1 ou 2,
**caractérisée en ce que**
la paroi (105) est disposée sur le dispositif d'étanchéité (104).

4. Fermeture selon l'une quelconque des revendications 1 à 3,
**caractérisée en ce que**
les parties de corps (104.1, 104.2) du dispositif d'étanchéité (104) sont constituées mobiles l'une par rapport à l'autre comme un piston de levage.

5. Fermeture selon l'une quelconque des revendications 1 à 4,
**caractérisée en ce qu'**
entre les deux parties de corps (104.1, 104.2) est prévu un interstice (104.3) pouvant être sollicité avec une même pression que le couvercle (102) et allant jusqu'à l'élément d'étanchéité (103).

6. Fermeture selon la revendication 5,
**caractérisée en ce que**
l'interstice (104.3) en direction de l'ouverture (101) est constituée passant de façon inclinée vers le bas.
